# EUROPEAN PATENT APPLICATION

(11) **EP 2 568 751 A1**
(43) Date of publication of application: **13.03.2013**
(21) Application number: 11777106.3
(22) Date of filing: 14.03.2011
(51) Int. Cl.: H04W 48/20, H04W 92/12

(54) **METHOD AND SYSTEM FOR SELECTING AND ESTABLISHING DIRECT INTERFACE**

(30) Priority: 07.05.2010 CN 201010168408
(71) Applicant: ZTE Corporation, Shenzhen, Guangdong 518057 (CN)
(72) Inventor: XI, Jin, Shenzhen Guangdong 518057 (CN); WANG, Shengming, Shenzhen Guangdong 518057 (CN); HAN, Lifeng, Shenzhen Guangdong 518057 (CN)
(74) Representative: Jansen, Cornelis Marinus
(86) International application number: PCT/CN2011/071782
(87) International publication number: WO 2011/137685

(57) **Abstract**

A method for selecting and establishing a direct interface is provided. The method includes: when a target network element accesses a network element of a core network (CN) via a target gateway, a source side or a target side selects to establish a direct interface with the target gateway and/or the target network element. A system for selecting and establishing a direct interface is also provided. The system includes a selection and establishment unit for, when the target network element accesses the network element of the CN via the target gateway, selecting to establish the direct interface with the target gateway and/or the target network element by the source side or the target side. Use of the method and system in the present invention can realize establishment of an optional direct interface, so that a plurality of direct interface schemes can be selected.

## Description

### Field of the Invention

The disclosure relates to a wireless cellular commutation system, particularly relating to a method and system for selecting and establishing a direct interface.

### Background of the Invention

A home base station, which is of small size and low power, is deployed indoor in a home or an office etc. mainly for providing higher service rate for users while lowering the cost required by high-rate services, and overcoming the limited coverage of the existing distributed cellular radio communication systems. The home base station has the following advantages: it is cheap, convenient, and plug-and-play with low-power output etc.

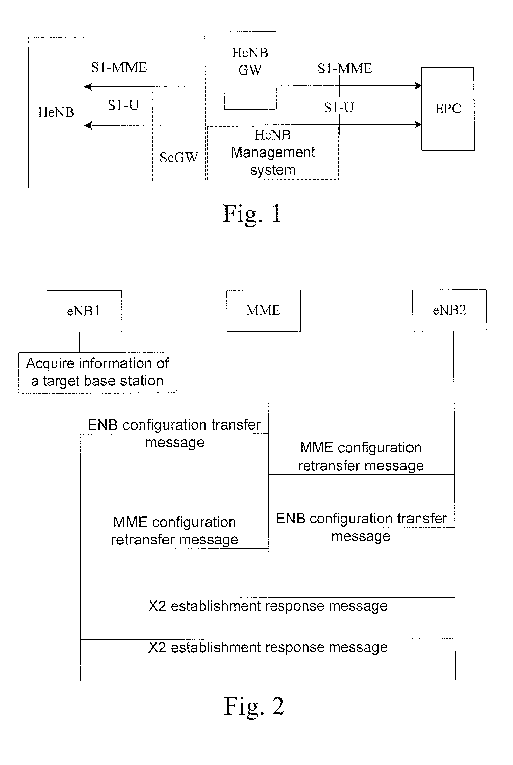

In a Long Term Evolution (LTE) system or a Universal Mobile Telecommunications System (UMTS), users of the home base station are connected to a core network (CN) by a home base station access network. As shown in Fig. 1, the home base station access network comprises a home base station and a home base station gateway. The home base station gateway has the following major functions: verifying safety of the home base station, handling registration and access control of the home base station and exchanging data of the CN and the home base station. A home base station management system is configured to operate, maintain and manage the home base station, configure and control the home base station according to requirements of the operator, and mainly configured to realize configuration management for the home base station, including verification of location information and home base station parameter configuration which mainly involves parameter configuration of the CN grade, parameter configuration at a Radio Access Network (RAN) side and radio frequency (RF) parameter configuration.

The home base station can be deployed in public places such as schools and department stores etc. Many home base stations can be deployed in the same enterprise. Direct interfaces between the home base stations should be taken into consideration to accelerate switching. For enterprises, it is reasonable to establish direct interfaces between the home base stations because the switching can be accelerated while reducing the load of the CN by these direct interfaces and the direct interfaces are convenient to establish and maintain. A process to establish the current common X2 direct interface is introduced briefly below:
in the process to establish the current common X2 direct interface as shown in Fig. 2, first, when there is no address information of a target base station eNB2, an eNB1 acquires information for acquiring the eNB2's IP address according to an Automatic Neighbor Relation (ANR) or a neighbor configured by an Operation Administration and Maintenance (OAM) system or the information of the eNB2, the information including an eNB ID and a Tracking Area Identifier (TAI) required by the IP address of the eNB2. Subsequently, the eNB1 sends an eNB configuration transfer message, which includes an eNB1 identifier, an eNB1 TAI, an eNB2 identifier, an eNB2 TAI, and an IP acquisition request indicator, to a Mobile Management Entity (MME). The MME performs routing according to the eNB2 TAI in the received eNB configuration transfer message, uses an MME configuration transfer message to repackage the ENB configuration transfer message and sends the repackaged MME configuration transfer message to the target base station eNB2. After receiving the MME configuration transfer message, the eNB2 reads the information from the message, judges whether or not the message is an IP address acquisition request, generates an eNB configuration message in which the IP address of the eNB2 is carried and which indicates a response to the IP address acquisition and includes the TAIs and base station identifiers of the eNB1 and eNB2, and sends the eNB configuration message to the MME. The MME packages the eNB configuration message using the MME configuration transfer message according to the TAI information of the target base station eNB1 and sends the MME configuration transfer message to the eNB1. After receiving the MME configuration transfer message, the eNB1 acquires the IP address of the eNB2 according to the response of the IP address. After receiving the transfer address of the eNB2, the eNB1 sends an X2 establishment request message to the eNB2. After receiving the X2 establishment request message, the eNB2 judges whether or not to establish the X2 direct interface. If yes, the eNB2 sends an X2 establishment response message to the eNB1 and establishes the X2 direct interface. Otherwise, the eNB2 sends an X2 establishment failure message to the eNB1.

It is relatively simple to establish X2 direct interfaces between macro base stations because each cell belongs to a specific macro base station. After the introduction of the concept of home base station, the original flat network structure is broken by the gateway of the home base station. The gateway of the home base station serves as a macro base station and a management network element of their home base station at the same time. Therefore, the direct interface of the source eNB and the home base station administrated by the home base station gateway can be established between the source eNB and the home base station gateway. Under the circumstance, the home base station gateway has a function similar to a proxy and interacts with the home base station administrated by the home base station gateway. Or, the direct interface of the source eNB and the home base station administrated by the home base station gateway can be directly established between the source eNB and the home base station. Under the circumstance, the home base station gateway only performs routing for messages on the direct interface optionally. After the introduction of the home base station, when the home base station accesses the CN network element by the home base station gateway, there is no establishment of an optional direct interface to select a plurality of direct interface schemes currently. Therefore, a scheme for selecting and establishing a direct interface is needed urgently.

### Summary of the Invention

In view of this, the major objective of the disclosure is to provide a method and system for selecting and establishing a direct interface to realize establishment of an optional direct interface, so that a plurality of direct interface schemes can be selected.

To achieve the objective above, the technical solution of the disclosure is realized by:
a method for selecting and establishing a direct interface, includes: when a target network element accesses a network element of a CN via a target gateway, a source side or a target side selecting to establish a direct interface with the target gateway and/or the target network element;
wherein a type of the target network element is a home base station and a type of the target gateway is a home base station gateway;
when the source side performs the selecting, the method further comprises: the source side initiating an address acquisition request and acquiring address information from a returned address acquisition response, arbitrarily selecting the address information of the target home base station gateway and/or target home base station from the address information, and selects the target home base station gateway and/or target home base station to establish a direct interface with the target home base station gateway and/or target home base station;
wherein a type of the target network element is a home base station and a type of the target gateway is a home base station gateway;
when the source side performs the selecting, the method further comprises: the target home base station gateway and the target home base station responding to the address acquisition request sent by the source side; wherein
the target home base station gateway and the target home base station fill their respective information in the address acquisition response; or the target home base station gateway fills its own information and the information of the target home base station in the address acquisition response;
wherein the information filled in the address acquisition response comprises at least one of the following:
   Information 1: identifier of the target home base station gateway;
   Information 2: Transport Network Layer (TNL) address of the target home base station gateway;
   Information 3: identifier of the target home base station; and
   Information 4: TNL address of the target home base station;
wherein a type of the target network element is a home base station and a type of the target gateway is a home base station gateway;
when the target side performs the selecting, the method further includes: the target side selecting to return the information of the selected target home base station gateway and/or target home base station to the source side; the source side, according to the selected information, establishes a direct interface with the target home base station gateway and/or target home base station selected by the target side;
wherein the selected information includes at least one of the following:
   Information 1: identifier of the target home base station gateway;
   Information 2: TNL address of the target home base station gateway;
   Information 3: identifier of the target home base station; and
   Information 4: TNL address of the target home base station;
wherein the source side includes a source network element; the target side includes a target home base station gateway or a target home base station, wherein the source network element includes: a macro base station or a home base station.

A system for selecting and establishing a direct interface, comprises: a selection and establishment unit, configured to select to establish a direct interface with the target gateway and/or the target network element by the source side or the target side when the target network element accesses the CN network element by the target gateway;
wherein the selection and establishment unit is further configured to, when a type of the target network element is a home base station and a type of the target gateway is a home base station gateway and when the source side performs the selection, initiate an address acquisition request and acquire the address information from a returned address acquisition response, arbitrarily select the address information of the target home base station gateway and/or target home base station, and select the target home base station gateway and/or target home base station to establish a direct interface with the target home base station gateway and/or target home base station by the source side;
wherein the system further comprises: a response unit, configured to, when a type of the target network element is a home base station and a type of the target gateway is a home base station gateway and when the source side performs the selection, use the target home base station gateway and the target home base station to respond to the address acquisition request sent by the source side, wherein the target home base station gateway and the target home base station fill their respective information in the address acquisition response; or the target home base station gateway fills its own information and the information of the target home base station in the address acquisition response;
wherein the selection and establishment unit is further configured to, when type of the target network element is a home base station and the type of the target gateway is a home base station gateway and when the target side performs the selection, select to return the information of the selected target home base station gateway and/or target home base station to the source side by the target side; the source side, according to the selected information, establishes a direct interface with the target home base station gateway and/or target home base station selected by the target side.

When the target network element of the disclosure accesses the CN network element via the target gateway, the source side or the target side selects to establish a direct interface with the target gateway and/or the target network element.

Using the present invention, the source side or target side can optionally select to establish a direct interface with the target gateway and/or target network element, to realize establishment of an optional direct interface, so that a plurality of direct interface schemes can be selected.

### Brief Description of the Drawings

Fig. 1 shows a network structural diagram of a home base station of the current LTE system;
Fig. 2 shows a flowchart of establishing the current common X2;
Fig. 3 shows a flowchart of realizing Embodiment 1 of the method of the disclosure;
Fig. 4 shows a flowchart of realizing Embodiment 2 of the method of the disclosure.

### Detailed Description of the Embodiments

The basic idea of the disclosure is as follows: when a target network element accesses a network element of a CN via a target gateway, a source side or a target side selects to establish a direct interface with a target gateway and/or a target network element. The CN network element of this application includes: a MME in a LTE system, or a Mobile Switching Centre (MSC)/Serving General Packet Radio Service (GPRS) Support Node (SGSN) in a Universal Mobile Telecommunications System (UMTS), which will not be described in details in this application.

The technical solution of the disclosure is described below with reference to the accompanying drawings in details:
a method for selecting and establishing a direct interface, mainly includes the following contents:
   when a target network element accesses a network element of a CN via a target gateway, a source side and a target side selecting to establish a direct interface with the target gateway and/or the target network element, wherein the source side includes a source network element, and the target side includes a target home base station gateway or a target home base station.

Further descriptions are provided below when the type of the target network element is a home base station, and the type of the target gateway is a home base station gateway:
During the direct interface establishment performed when the home base station accesses the CN network element via the home base station gateway, the source side or the target side can select to establish the direct interface, and optionally establishes the direct interface with the home base station gateway and/or the home base station.

Here, when the home base station accesses the CN network element via the home base station gateway, the source side can select different direct interface establishment methods according to the information of the optional direct interface establishment. The direct interface establishment methods comprise: establishing the direct interface with the home base station gateway, or with the home base station, or with both the home base station gateway and the home base station. The different direct interface establishment methods selected by the source side or the target side are described in details below:
Situation 1: if the direct interface establishment method is selected by the source side, the information of the optional direct interface establishment is: the address information of the target home base station gateway and/or the target home base station.

During the process in which the source side acquires the address of the TNL of the target home base station, the address information of the target home base station gateway and/or target home base station can be acquired at the same time. The source side, according to the acquired address information, selects to establish the direct interface with the target home base station gateway and/or the target home base station, and initiates the establishment of the direct interface.

Here, when the target home base station gateway and the target home base station respond to the TNL address acquisition sent by network element, the target home base station gateway and the target home base station can fill their respective information in the TNL address acquisition response, or the target home base station gateway fills its own information and the information of the target home base station in the TNL address acquisition response, wherein the filled information, i.e. the information of the target home base station gateway and the target home base station includes at least one of: an identifier of the target home base station gateway, a TNL address of the target home station gateway, an identifier of the target home base station, and a TNL address of the target home base station. Besides at least one of the information above, the filled information optionally further comprises the type of the target network element and the type of the target network element can be used with at least one of the information above. The target network element is the target home base station or the target home base station gateway. The TNL address of this application includes an Internet Protocol (IP) address, which will not be described in details in this application.

Situation 2: if the direct interface establishment method is selected by the target side, the information of the optional direct interface establishment method is: the address information of the target home base station gateway and/or the target home base station.

During the process in which the TNL address of the target home base station is obtained by the target side, the target side selects to return the information of the selected target home base station gateway and/or target home base station to the source side; the source side, according to the acquired information, initiates the direct interface establishment to the network element selected by the target side, wherein the information of the selected target home base station gateway and/or target home base station is configured to be directed to the network element selected by the target side and the selected network element can be the target home base station gateway and/or target home base station.

Here, the information of the selected target home base station gateway and/or target home base station includes at least one of the followings: an identifier of the target home base station gateway, a TNL address of the target home station gateway, an identifier of the target home base station, a TNL address of the target home base station and the type of the target network element.

Here, it should be pointed out that: the main difference between Situation 1 and Situation 2 is that: in Situation 1, the target side can include the information of multiple addresses in the returned information when the source side performs the selection, the source side initiates the direct interface establishment to the selected network element after automatically selecting the address in the information; in Situation 2, the address information selected by the target side is included in the returned information, the target side directly initiates the direct interface establishment to the selected network element directed by the selected address information.

When the source side is the source network element and the target side is the target network element, the type of either the source network element or the target network element can include: the macro base station or the home base station.

The disclosure is described below by examples.

### Embodiment 1: the process in which the source side judges and selects the target network element to establish the direct interface.

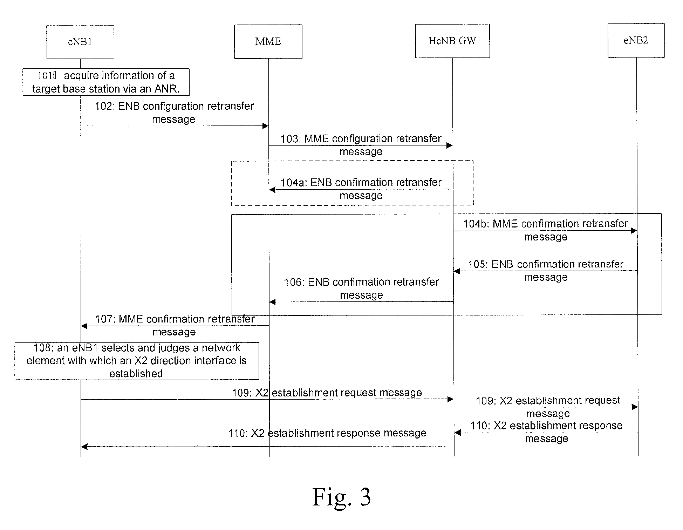

This embodiment describes the situation in which the source side determines to establish the direct interface to the target home base station or the home base station gateway after the target network element returns the address information during the acquisition of the address. In order to facilitate description, this application uses eNB1 to represent the source base station and eNB2 to represent the target base station, wherein eNB1 can be a common macro base station, or a home base station and a home base station gateway, the eNB2 accesses an MME via an HeNB GW, wherein Cell2 is managed by the eNB2. As shown in Fig. 3, the process of establishing the direct interface of the embodiments of this method includes the following steps:
Step 101: the eNB1 acquires the information of the Cell2 according to an ANR.

Here, the information includes the TAI to which the Cell2 belongs, a cell identifier of a Public Land Mobile Network (PLMN) and an identifier of the Cell2. The eNB1 determines to establish an X2 direct interface to the eNB2 to which the Cell2 belongs, and acquire the identifier of the eNB2 via the configured routing information or from the cell identifier of the Cell2.
Step 102: the eNB1 sends to the MME an eNB configuration transfer message, the message including the identifier and TAI of the eNB2, and an IP acquisition request indicator.
Step 103: after receiving the eNB configuration transfer message, the MME performs routing according to the TAI of the eNB2 in the message and sends an MME configuration transfer message, which is configured to package the content in the eNB configuration transfer message, to the target base station eNB2.
Step 104a: the HeNB GW receives the MME configuration transfer message, if the IP address and eNB ID etc. of the eNB2 necessary to establish the direct interface are stored in the HeNB GW, the eNB configuration transfer message can be constructed by the HeNB GW at the moment, and the IP address of the HeNB GW and the IP address of the eNB2 etc. necessary for establishing the direct interface are filled in the message at the same time, e.g. HeNB ID, HeNB IP address, HeNB GW ID, and HeNB GW IP address. The eNB configuration transfer message is sent to the MME, wherein the identifier of the target base station is the identifier of the eNB1.
Step 104b: after receiving the MME configuration transfer message, the HeNB GW forwards the message to the eNB2 and acquires the eNB2 transfer address for establishing the direct interface.
Step 105: the eNB2 uses the eNB configuration transfer message to return a transfer address of the eNB2, which is configured to establish the direct interface, to the HeNB GW. The message includes: a HeNB ID and a HeNB IP address.
Step 106: after receiving the message in Step 105 which includes the eNB2 address, the HeNB GW reconstructs an eNB configuration transfer message in which the information of the HeNB GW is included, wherein the information includes a HeNB ID, a HeNB IP address, a HeNB GW ID, a HeNB GW IP address and indication information optionally configured to indicate whether it is the home base station gateway or the home base station. The eNB configuration transfer message is then sent to the MME, wherein the identifier of the target base station is the identifier of the eNB1.
Step 107: after receiving the eNB configuration transfer message returned in Step 104a or Step 106, the MME reuses the MME configuration transfer message to package the content in the eNB configuration transfer message and sends the MME configuration transfer message to the eNB1, wherein the MME configuration transfer message includes: a HeNB ID, a HeNB IP address, a HeNB GW ID and a HeNB GW IP address.
Step 108: after receiving the MME configuration transfer message, the eNB1 analyzes the content in the MME configuration transfer message, and, according to the information of the HeNB GW, the information of the eNB2 and the configuration of the eNB1, selects and judges the network element for establishing the X2 direct interface, i.e. the eNB1 judges whether to establish the direct interface to the home base station gateway or to the home base station.
Step 109: the eNB1 sends an X2 establishment request message to the home base station gateway or the home base station.
Step 110: the target network element returns an X2 establishment response message to the eNB1 and establishes the direct interface of the eNB1 and the target network element, wherein the target network element is the home base station gateway or the home base station.

In the process above, the network element which initiates the direct interface establishment can be the macro base station, or the home base station and home base station gateway, which will not be described in details in this application for the sake of brevity.

### Embodiment 2: the process in which the target side judges and selects to establish the direct interface.

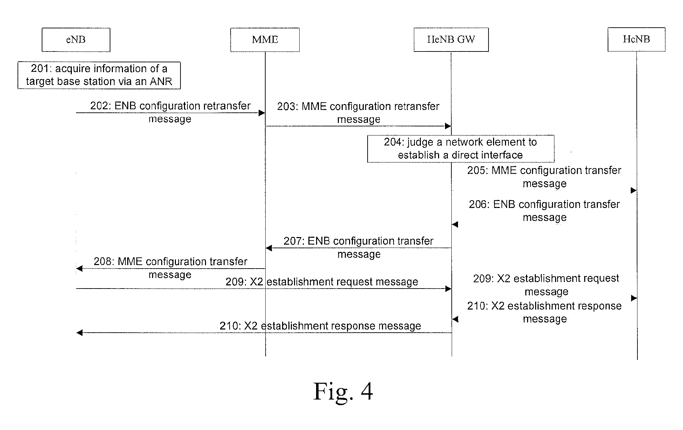

This embodiment describes the situation in which the target side determines whether to establish the direct interface with the target home base station or with the home base station gateway and the source side establishes the X2 direct interface according to the returned selected address information. In order to facilitate description, this application uses eNB1 to represent the source base station and eNB2 to represent the target base station, wherein the eNB1 can be a common macro base station, or a home base station and a home base station gateway, the eNB2 accesses the MME via the HeNB GW. As shown in Fig. 4, the process of establishing the direct interface of the embodiments of this method includes the following steps:
Step 201-Step 203 are the same as the description of Step 101-Step 103 in Embodiment 1 of the method, which will not be described in details in this application.
Step 204: after receiving the MME configuration transfer message, the HeNB GW determines the network element to establish the direct interface, i.e. the HeNB GW determines whether or not to allow the source network element or the eNB2 managed by the HeNB GW to establish the direct interface, or to establish the direct interface by itself.

Here, if the HeNB GW only allows the source network element to establish the direct interface or to establish the direct interface by itself, an eNB configuration transfer message in which the HeNB GW address information configured to establish the direct interface is carried, is returned to the MME, wherein the HeNB GW information optionally indicates that it is the address information of the home base station type, and Step 207 is executed. Otherwise, Step 205 is executed.
Step 205: the HeNB GW sends an MME configuration transfer message or other messages to the eNB2 to acquire the IP address of the eNB2.
Step 206: the eNB2 returns an eNB configuration transfer message or other messages to the home base station gateway to deliver the IP address of the eNB2 to the home base station gateway. The message includes: a HeNB ID and a HeNB IP address.
Step 207: after receiving the address of the eNB2, the home base station gateway delivers the IP address of the eNB2 to the MME via the eNB configuration transfer message which includes: a target network element ID and a network element IP address.
Step 208: after receiving the eNB configuration transfer message, the MME reuses the MME configuration transfer message to package the content in the eNB configuration transfer message and sends the MME configuration transfer message to the eNB1, wherein the MME configuration transfer message includes: a target network element ID and a target network element IP address.
Step 209: after receiving the MME configuration transfer message, the eNB1 analyzes the content of the MME configuration transfer message, and establishes the direct interface according to the network source address carried in the MME configuration transfer message. The eNB1 sends an X2 establishment request message to the home base station gateway or the home base station.
Step 201: the target network element returns an X2 establishment response message to the eNB1 to establish the direct interface of the eNB1 and the target network element, wherein the target network element is the home base station gateway or the home base station.

A system for selecting and establishing a direct interface includes: a selection and establishment unit for, when the target network element accesses the network element of the CN via the target gateway, selecting the target gateway and/or the target network element in order to establish the direct interface with the target gateway and/or the target network element by the source side or the target side.

Here, a type of the target network element is a home base station and a type of the target gateway is a home base station gateway. The selection and establishment unit is further configured to, when the source side performs the selection, initiate an address acquisition request and acquire the address information from a returned address acquisition response, arbitrarily select the address information of the target home base station gateway and/or target home base station, and select the target home base station gateway and/or target home base station to establish a direct interface with the target home base station gateway and/or target home base station by the source side.

Here, a type of the target network element is a home base station and a type of the target gateway is a home base station gateway. The system further comprises a response unit, configured to configured to, when the source side performs the selection, use the target home base station gateway and the target home base station to respond to the address acquisition request sent by the source side, wherein the target home base station gateway and the target home base station fill their respective information in the address acquisition response; or the target home base station gateway fills its own information and the information of the target home base station in the address acquisition response;

Here, the type of the target network element is a home base station and the type of the target gateway, the selection and establishment unit is further configured to, when the target side performs the selection, select to return the information of the selected target home base station gateway and/or target home base station to the source side by the target side; the source side, according to the selected information, establishes a direct interface with the target home base station gateway and/or target home base station selected by the target side.

Here, the text involved above and the text in the drawings in Chinese and English are explained: the access network of the home base station is represented by H(e)NB AN, wherein H(e)NB represents any one of HeNB or HNB. When represented by HeNB, the home base station is a home bases station gateway in an LTE system. When presented by HeNB GW, the home base station gateway is a home base station gateway in an LTE system. The home base station management system in Fig. 1 is the HeNB management system, represented by HeMS. The SeGW in Fig. 1 is a security gateway. The EPC in Fig. 1 is an evolved packet core network.

What are described above are only preferred embodiments of the disclosure and are not for use in limiting the protection scope of the disclosure.

### Industrial Applicability

When the target network element of the disclosure accesses the CN network element via the target gateway, the source side or the target side selects to establish a direct interface with the target gateway and/or the target network element, to realize establishment of an optional direct interface, so that a plurality of direct interface schemes can be selected.

## Claims

1. A method for selecting and establishing a direct interface, **characterized by** comprising: when a target network element accesses a network element of a core network (CN) via a target gateway, a source side or a target side selecting to establish a direct interface with the target gateway and/or the target network element.

2. The method according to claim 1, **characterized in that** a type of the target network element is a home base station and a type of the target gateway is a home base station gateway;
and when the source side performs the selecting, the method further comprises: the source side initiating an address acquisition request and acquiring address information from a returned address acquisition response, arbitrarily selecting the address information of the target home base station gateway and/or target home base station from the address information, and selecting the target home base station gateway and/or target home base station to establish a direct interface with the target home base station gateway and/or target home base station.

3. The method according to claim 2, **characterized in that** a type of the target network element is a home base station and a type of the target gateway is a home base station gateway;
when the source side performs the selecting, the method further comprises: the target home base station gateway and the target home base station responding to the address acquisition request sent by the source side; wherein
the target home base station gateway and the target home base station fill their respective information in the address acquisition response; or the target home base station gateway fills its own information and the information of the target home base station in the address acquisition response.

4. The method according to claim 3, **characterized in that** the information filled in the address acquisition response comprises at least one of the following:
Information 1: identifier of the target home base station gateway;
Information 2: Transport Network Layer (TNL) address of the target home base station gateway;
Information 3: identifier of the target home base station; and
Information 4: TNL address of the target home base station.

5. The method according to claim 1, **characterized in that** a type of the target network element is a home base station and a type of the target gateway is a home base station gateway;
when the target side performs the selecting, the method further includes: the target side selecting to return information of the selected target home base station gateway and/or target home base station to the source side; the source side, according to the selected information, establishing a direct interface with the target home base station gateway and/or target home base station selected by the target side.

6. The method according to claim 5, **characterized in that** the selected information includes at least one of the following:
Information 1: identifier of the target home base station gateway;
Information 2: TNL address of the target home base station gateway;
Information 3: identifier of the target home base station; and
Information 4: TNL address of the target home base station.

7. The method according to claim 1, wherein the source side includes a source network element; and the target side includes a target home base station gateway or a target home base station, wherein the source network element includes: a macro base station or a home base station.

8. A system for selecting and establishing a direct interface, **characterized by** comprising a selection and establishment unit, configured to select to establish a direct interface with the target gateway and/or the target network element by the source side or the target side when the target network element accesses the CN network element by the target gateway.

9. The system according to claim 8, **characterized in that** the selection and establishment unit is further configured to, when a type of the target network element is a home base station and a type of the target gateway is a home base station gateway and when the source side performs the selection, initiate an address acquisition request and acquire the address information from a returned address acquisition response, arbitrarily select address information of the target home base station gateway and/or target home base station, and select the target home base station gateway and/or target home base station to establish a direct interface with the target home base station gateway and/or target home base station by the source side.

10. The system according to claim 9, **characterized in that** the system further comprises: a response unit, configured to, when a type of the target network element is a home base station and a type of the target gateway is a home base station gateway and when the source side performs the selection, use the target home base station gateway and the target home base station to respond to the address acquisition request sent by the source side, wherein
the target home base station gateway and the target home base station fill their respective information in the address acquisition response; or the target home base station gateway fills its own information and the information of the target home base station in the address acquisition response.

11. The system according to claim 8, **characterized in that** the selection and establishment unit is further configured to, when type of the target network element is a home base station and the type of the target gateway is a home base station gateway and when the target side performs the selection, select to return the information of the selected target home base station gateway and/or target home base station to the source side by the target side; the source side, according to the selected information, establishes a direct interface with the target home base station gateway and/or target home base station selected by the target side.
